# EUROPEAN PATENT APPLICATION

(11) **EP 2 963 870 A1**
(43) Date of publication of application: **06.01.2016**
(21) Application number: 14757243.2
(22) Date of filing: 26.02.2014
(51) Int. Cl.: H04L 12/717, H04L 12/46

(54) **CONTROL APPARATUS, COMMUNICATION SYSTEM, SWITCH CONTROL METHOD AND PROGRAM**

(30) Priority: 27.02.2013 JP 2013037510
(71) Applicant: NEC Corporation, Tokyo 108-8001 (JP)
(72) Inventor: TAKASHIMA, Masanori, Tokyo 108-8001 (JP); SUZUKI, Yoji, Tokyo 108-8001 (JP); KUBOTA, Kazushi, Tokyo 108-8001 (JP)
(74) Representative: Reeve, Nicholas Edward
(86) International application number: PCT/JP2014/054716
(87) International publication number: WO 2014/133015

(57) **Abstract**

A plurality of switches include first packet forwarding function that processes a packet based on control information set externally, and second packet forwarding function that learns relationship between a transmission source address and a receiving port of a received packet and determines an output port of a packet. A control apparatus comprises: communication unit that communicates with the plurality of switches; control information setting unit that sets control information instructing the first packet forwarding function of the plurality of switches to forward a packet using the second packet forwarding function; path calculation unit that calculates a packet forwarding path based on connection relationship among the plurality of switches; and VLAN setting unit that sets a VLAN ID predetermined for the packet for input/output ports of the packet in a switch(es) on the packet forwarding path. The present invention contributes to facilitating the implementation of a centrally controlled network.

## Description

### TECHNICAL FIELD

### (Reference to Related Application)

The present invention is based upon Japanese patent application No. 2013-037510 filed on February 27th, 2013, the disclosure of which is incorporated herein in its entirety by reference thereto.

The present invention relates to a control apparatus, communication system, switch control method, and program, and particularly to a control apparatus, communication system, switch control method, and program that forward a packet by setting control information for a switch.

### BACKGROUND

In recent years, networks having the packet forwarding function of a network device separated from control functions such as controlling a path have gained a lot of attention. In such a network, the network device is responsible for the packet forwarding function, and a controller externally separated from the network device is responsible for control functions. Such a configuration enables the construction of a flexible network that can be easily controlled.

Non-Patent Literatures 1 and 2 propose a technology called OpenFlow that realizes a centrally controlled network described above. OpenFlow treats communication as an end-to-end flow and performs path control, failure recovery, load balancing, and optimization for each flow. An OpenFlow switch, specified in Non-Patent Literature 2, comprises a secure channel for communicating with an OpenFlow controller and operates according to a flow table, an addition to or rewriting of which is suitably instructed by the OpenFlow controller. In the flow table, a set of matching rules (Match Fields) to be matched against a packet header, flow statistics (Counters), and Instructions defining the processing contents is defined for each flow (refer to the section of "5.2 Flow Table" in Non-Patent Literature 2).

For instance, upon receiving a packet, the OpenFlow switch searches for an entry having a matching rule (refer to "5.3 Matching" in Non-Patent Literature 2) that matches the header information of the received packet in the flow table. When an entry matching the received packet is found as a result of the search, the OpenFlow switch updates the flow statistics (Counters) and performs the processing contents (packet transmission from a designated port, flooding, discard, etc.) written in the instruction field of the entry on the received packet. On the other hand, when no entry matching the received packet is found as a result of the search, the OpenFlow switch requests the OpenFlow controller to set an entry via the secure channel, transmitting a request (Packet-In message) for control information for processing the received packet. The OpenFlow switch receives a flow entry that defines the processing contents and updates the flow table. As described, the OpenFlow switch forwards packets using entries stored in the flow table as control information. As described, the OpenFlow switch forwards a packet using an entry stored in the flow table as control information.

Further, the section of "5.1 Pipeline Processing" in Non-Patent Literature 2 describes OpenFlow-hybrid switch that comprises the functions of layer 2 Ethernet (registered trademark) switching and layer 3 routing, in addition to the function as the OpenFlow switch described above.

### CITATION LIST

### NON-PATENT LITERATURE

Non-Patent Literature 1:
   Nick McKeown, et. al. "OpenFlow: Enabling Innovation in Campus Networks," [online], [searched on February 18th, 2013], the Internet <URL: http://www.openflow.org/documents/openflow-wp-latest.pdf>
Non-Patent Literature 2:
   "OpenFlow Switch Specification" Version 1.3.1 (Wire Protocol 0x04), [online], [searched on February 18th, 2013], the Internet <URL: https://www.opennetworking.org/images/stories/downloads/specificatio n/openflow-spec-v1.3.1.pdf>

### SUMMARY

### TECHNICAL PROBLEM

The disclosure of each Non-Patent Literature cited above is incorporated herein in its entirety by reference thereto. The following analysis is given by the present invention. As described above, in a centrally controlled network represented by OpenFlow, detailed and centralized control can be achieved for each flow. At the same time, in order to realize detailed high-speed control, a CAM (Content addressable Memory) with sufficient capacity for storing flow entries is required. Particularly, when the number of connected terminals increases thereby increasing the scale of the network, so does the number of flow entries set for each switch.

Devices such as the CAM, however, cannot be built into inexpensive switches in large quantities due to various reasons such as price, performance, and power consumption. This has become a bottleneck in implementing a centrally controlled network in a network constituted by using inexpensive switches.

It is an object of the present invention to provide a control apparatus, communication system, switch control method, and program capable of contributing to facilitating the implementation of a centrally controlled network.

### SOLUTION TO PROBLEM

According to a first aspect, there is provided a control apparatus. The control apparatus comprises a communication unit that communicates with a plurality of switches including a first packet forwarding function that processes a packet based on control information set externally and a second packet forwarding function that learns relationship between a transmission source address and a receiving port of a received packet and determines an output port of a packet. Further, the control apparatus comprises a control information setting unit that sets control information instructing the first packet forwarding function of the plurality of switches to forward a packet using the second packet forwarding function. Moreover, the control apparatus comprises a path calculation unit that calculates a packet forwarding path based on connection relationship among the plurality of switches. Further, the control apparatus comprises a VLAN (Virtual Local Area Network) setting unit that sets a VLAN ID (VLAN Identifier) predetermined for the packet for input/output ports of the packet in a switch(es) on the packet forwarding path.

According to a second aspect, there is provided a communication system. The communication system comprises: a plurality of switches; and a control apparatus. The plurality of switches include a first packet forwarding function that processes a packet based on control information set externally, and a second packet forwarding function that learns relationship between a transmission source address and a receiving port of a received packet and determines an output port of a packet. The control apparatus comprises a communication unit that communicates with the plurality of switches. Further, the control apparatus comprises a control information setting unit that sets control information instructing the first packet forwarding function of the plurality of switches to forward a packet using the second packet forwarding function. Moreover, the control apparatus comprises a path calculation unit that calculates a packet forwarding path based on connection relationship among the plurality of switches. Further, the control apparatus comprises a VLAN (Virtual Local Area Network) setting unit that sets a VLAN ID (VLAN Identifier) predetermined for the packet for input/output ports of the packet in a switch(es) on the packet forwarding path.

According to a third aspect, there is provided a switch control method performed by a control apparatus comprising a communication unit that communicates with a plurality of switches including a first packet forwarding function that processes a packet based on control information set externally, and a second packet forwarding function that learns relationship between a transmission source address and a receiving port of a received packet and determines an output port of a packet. The switch control method comprises, by the control apparatus, setting control information instructing the first packet forwarding function of the plurality of switches to forward a packet using the second packet forwarding function. Further, the switch control method comprises, by the control apparatus, calculating a packet forwarding path based on connection relationship among the plurality of switches. Moreover, the switch control method comprises, by the control apparatus, setting a VLAN ID (Virtual Local Area Network Identifier) predetermined for the packet for input/output ports of the packet in a switch(es) on the packet forwarding path. The present method is tied to a particular machine, which is the control apparatus that controls the switch group.

According to a fourth aspect, there is provided a program for a computer, comprising a communication unit that communicates with a plurality of switches including a first packet forwarding function that processes a packet based on control information set externally and a second packet forwarding function that learns relationship between a transmission source address and a receiving port of a received packet and determines an output port of a packet. The program causes the computer to execute setting control information instructing the first packet forwarding function of the plurality of switches to forward a packet using the second packet forwarding function. Further, the program causes the computer to execute calculating a packet forwarding path based on connection relationship among the plurality of switches. Moreover, the program causes the computer to execute setting a VLAN ID (Virtual Local Area Network Identifier) predetermined for the packet for input/output ports of the packet in a switch(es) on the packet forwarding path. Note that the program can be stored in a computer-readable (non-transient) storage medium. In other words, the present invention can be realized as a computer program product.

### ADVANTAGEOUS EFFECTS OF INVENTION

According to the present invention, it becomes possible to contribute to facilitating the implementation of a centrally controlled network.

### BRIEF DESCRIPTION OF THE DRAWINGS

Fig. 1 is a drawing showing the configuration of a communication system of a first exemplary embodiment of the present invention.
Fig. 2 is a drawing showing a schematic network configuration for explaining the communication system of the first exemplary embodiment of the present invention.
Fig. 3 is a flowchart for explaining the operation of a control apparatus of the first exemplary embodiment of the present invention.
Fig. 4 is a drawing corresponding to the operation in step S11 in Fig. 3.
Fig. 5 is a drawing corresponding to the operation in step S12 in Fig. 3.
Fig. 6 is a drawing corresponding to the operation in step S13 in Fig. 3.
Fig. 7 is a flowchart for explaining the operation of a switch of the first exemplary embodiment of the present invention.
Fig. 8 is a flowchart for explaining a path switching operation of the control apparatus of the first exemplary embodiment of the present invention.
Fig. 9 is a drawing corresponding to the operation in step S41 in Fig. 8.
Fig. 10 is a drawing corresponding to the operations in steps S42 and S43 in Fig. 8.
Fig. 11 is a drawing for explaining changes in the information held by
tables of the switches of the first exemplary embodiment of the present invention.
Fig. 12 is a drawing for explaining changes in the information held by the tables of the switches of the first exemplary embodiment of the present invention.
Fig. 13 is a drawing for explaining changes in the information held by the tables of the switches of the first exemplary embodiment of the present invention.
Fig. 14 is a drawing for explaining changes in the information held by the tables of the switches of the first exemplary embodiment of the present invention.
Fig. 15 is a drawing for explaining changes in the information held by the tables of the switches of the first exemplary embodiment of the present invention.
Fig. 16 is a drawing for explaining changes in the information held by the tables of the switches of the first exemplary embodiment of the present invention.
Fig. 17 is a drawing for explaining changes in the information held by the tables of the switches of the first exemplary embodiment of the present invention.
Fig. 18 is a drawing for explaining changes in the information held by the tables of the switches of the first exemplary embodiment of the present invention.
Fig. 19 is a flowchart for explaining the operation of a control apparatus of a second exemplary embodiment of the present invention.
Fig. 20 is a drawing for explaining the operation of a communication system of the second exemplary embodiment of the present invention.
Fig. 21 is a drawing for explaining the operation of the communication system of the second exemplary embodiment of the present invention.
Fig. 22 is a drawing for explaining the operation of the communication system of the second exemplary embodiment of the present invention.
Fig. 23 is a drawing for explaining the operation of the communication system of the second exemplary embodiment of the present invention.

### DESCRIPTION OF EMBODIMENTS

First, a summary of an exemplary embodiment will be given with reference to the drawings. Note that drawing reference signs in the summary are given to each element as an example solely to facilitate understanding for convenience, and are not intended to limit the present invention to the modes shown in the drawings.

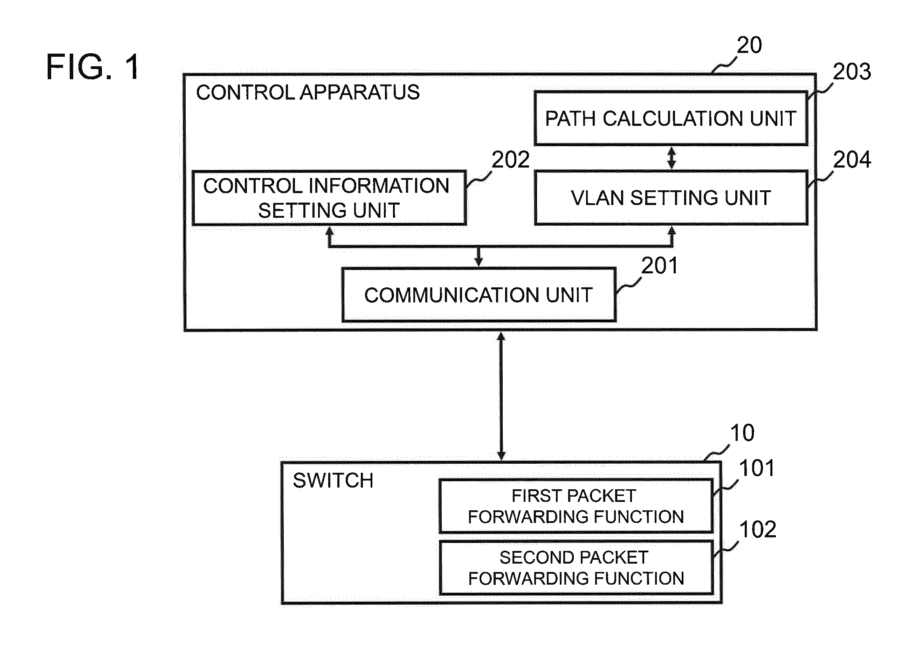

With reference to Fig. 1, the present invention in an exemplary embodiment thereof can be realized by a configuration including a switch 10 that comprises a first packet forwarding function 101 that processes a packet on the basis of control information set externally and a second packet forwarding function 102 that learns the relationship between the transmission source address and the receiving port of a received packet and determines an output port of the packet, and a control apparatus 20.

More concretely, the control apparatus 20 can be realized by a control apparatus that comprises a communication unit 201 that communicates with the switch 10; a control information setting unit 202 that sets control information that instructs the first packet forwarding function 101 of the switch 10 to forward a packet using the second packet forwarding function 102; a path calculation unit 203 that calculates a packet forwarding path on the basis of the connection relationships among the switches; and a VLAN setting unit 204 that sets a predetermined VLAN ID (Virtual Local Area Network ID) of the packet for input/output ports of the packet in the switches on the packet forwarding path.

The control apparatus 20 sets a VLAN ID for ports of the switches on the intended path while setting the control information that instructs the switch 10 to forward a packet using the second packet forwarding function 102. As a result, upon receiving a packet, the switch 10 forwards the packet using the second packet forwarding function 102 according to the control information set for the first packet forwarding function. More concretely, the switch 10 starts to forward the packet on the basis of the results learned by the second packet forwarding function 102. Meanwhile, since a VLAN ID has been set on the intended path, it is possible to achieve flow control at least at the Layer 2 level without setting a large amount of control information.

### (First Exemplary Embodiment)

Next, a first exemplary embodiment of the present invention will be described in detail with reference to the drawings. Fig. 1 is a drawing showing the configuration of a communication system of the first exemplary embodiment of the present invention. Fig. 1 shows a configuration in which the switch 10 is connected to the control apparatus 20 via a control channel. The example in Fig. 1 shows one switch 10 connected to one control apparatus 20, but there may be a plurality of switches 10 and a plurality of control apparatuses 20.

The switch 10 comprises the first packet forwarding function 101 that processes a received packet on the basis of the control information set by the control apparatus 20, and the second packet forwarding function 102 that learns the relationship between the transmission source address and the receiving port of a received packet and determines an output port of the packet. This switch 10 can be realized by setting control information (flow entry) that instructs forwarding from a reserved port for the OpenFlow-hybrid switch in Non-Patent Literature 2.

The control apparatus 20 comprises the communication unit 201 that communicates with the switch 10 using, for instance, the OpenFlow protocol; the control information setting unit 202 that sets the control information that instructs the first packet forwarding function 101 of the switch 10 to forward a packet using the second packet forwarding function 102; the path calculation unit 203 that calculates a packet forwarding path on the basis of the connection relationships among the switches; and the VLAN setting unit 204 that sets a predetermined VLAN ID of the packet for input/output ports of the packet in the switches on the packet forwarding path.

Further, each unit (processing means) of the control apparatus 20 and the switch 10 shown in Fig. 1 can be realized by a computer program that has a computer constituting these devices execute each processing described above using the hardware thereof.

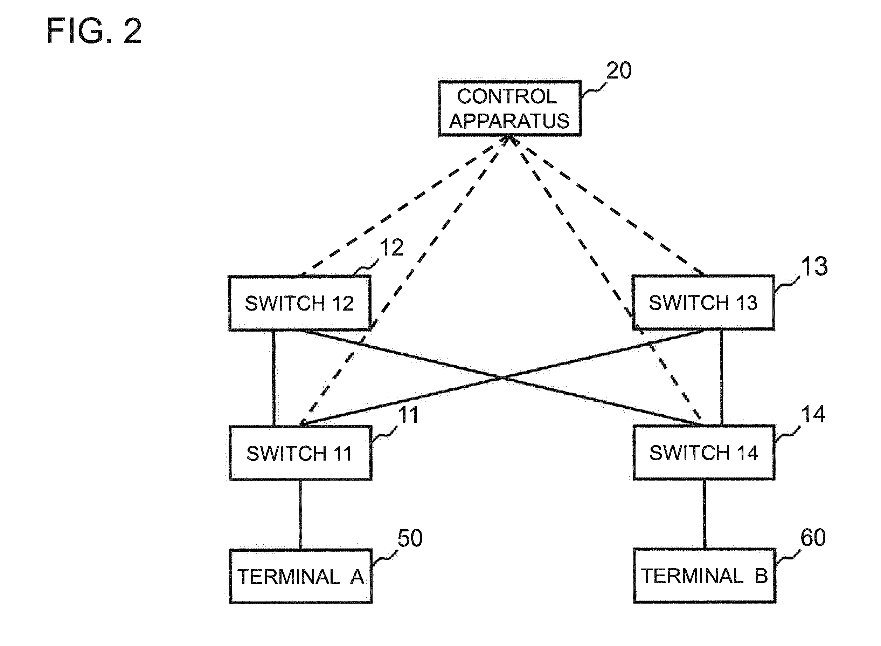

Next, the operations of the control apparatus 20 and the switch 10 of the present exemplary embodiment will described in detail with reference to the drawings. The description below assumes that the control apparatus 20 and four switches (configured identically to the switch 10 in Fig. 1) are connected as shown in Fig. 2. The solid lines in Fig. 2 indicate physical links among terminals A 50 and B 60 and the switches 11 to 14, and the dashed lines indicate control channels between the control apparatus 20 and the switches 11 to 14. In the description below, the control apparatus 20 controls a communication path between the terminals A 50 and B 60 by controlling the switches 11 to 14.

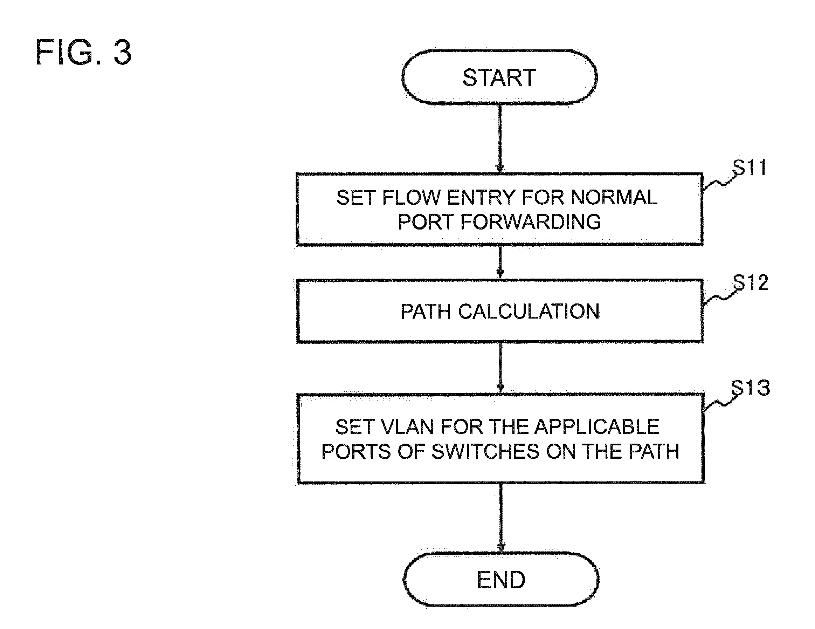

Fig. 3 is a flowchart for explaining the operation of the control apparatus 20 of the first exemplary embodiment of the present invention. In Fig. 3, the control apparatus 20 first sets control information (flow entry) for normal port forwarding for the controlled switches 11 to 14 (step S11 in Fig. 3). For instance, this processing may be triggered by the reception of a packet reception notification (Packet-In message) from the switches 11 to 14, or may be performed as initial setting processing by a network administrator.

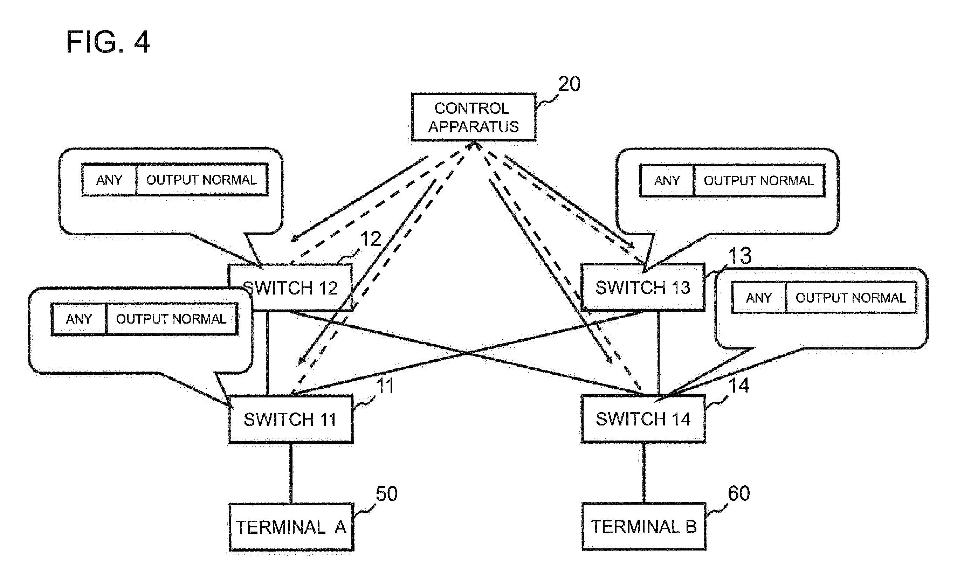

Fig. 4 is a drawing corresponding to the step S11 in Fig. 3. In the example of Fig. 4, the control apparatus 20 sets the control information (flow entry) for normal port forwarding for the switches 11 to 14. The example in Fig. 4 can be realized by associating a matching rule (ANY) that sets a wildcard in all fields with an action (OUTPUT NORMAL) that performs forwarding from the NORMAL port defined in Non-Patent Literature 2. Further, a wildcard does not need to be set in every matching rule field, and for instance a matching rule that specifies only an input port or one that targets only a packet having a specific field flagged as a subject of the control may be used.

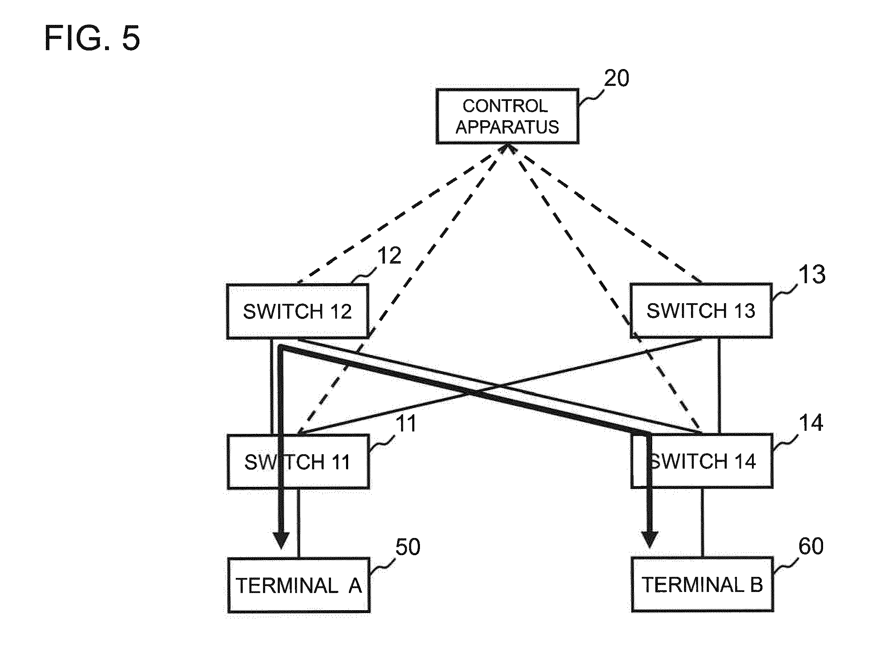

Next, the control apparatus 20 calculates a packet forwarding path between the terminals A 50 and B 60 (step S12 in Fig. 3). The path calculation may be performed each time on the basis of the network topology not shown in the drawing and the location information of the terminals A 50 and B 60 (connection switch information), or a path between the terminals A 50 and B 60 may be selected from a group of pre-calculated paths (for instance shortest path tree). Here, as shown in Fig. 5, it is assumed that a path going through the switches 11, 12, and 14 is calculated.

Next, the control apparatus 20 sets a VLAN ID determined for a packet between the terminals A 50 and B 60 for ports of the switches on the packet forwarding path, which serve as input/output ports of the packet between the terminals A 50 and B 60 (step S13 in Fig. 3). A VLAN ID attached to the packet received from the switch with the packet reception notification (Packet-In message) may be used as the VLAN ID set. Further, a control message for added functions such as the Experimenter message in Non-Patent Literature 2 can be used when the control apparatus 20 sets a VLAN ID for the switches 11 to 14. Further, a network setting protocol such as NETCONF or a method that sets a VLAN ID via an external system may be employed.

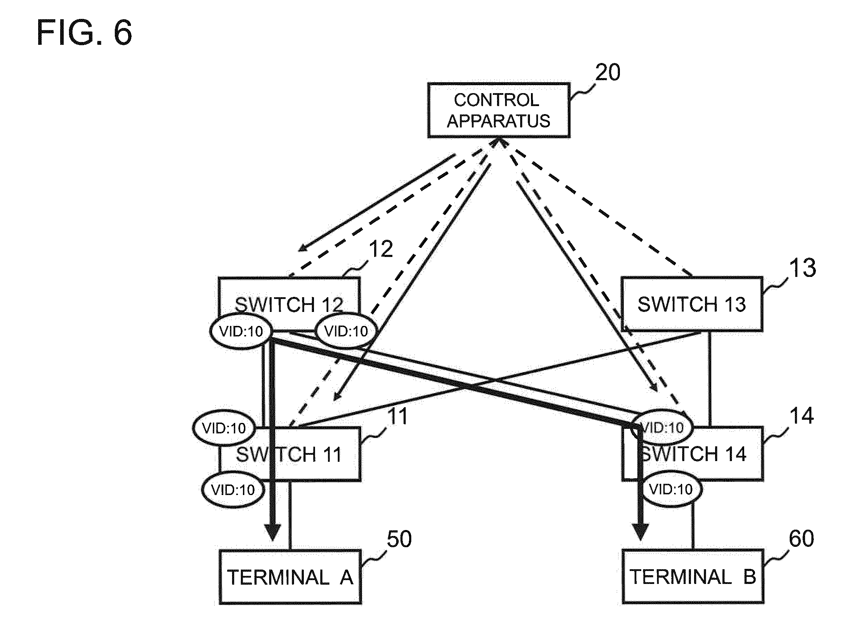

Fig. 6 is a drawing showing a state in which a VLAN ID of 10 has been set for the ports on the packet forwarding path between the terminals A 50 and B 60. In this state, when receiving a packet from the terminal A 50 to the terminal B 60, the switches 11, 12, and 14 learns the output ports thereof. Then, when receiving a packet from the terminal B 60 to the terminal A 50 the next time, they forward the packet from the learned ports. As shown in Fig. 6, since an appropriate VLAN ID has been set for the port on the path, the packet will not be discarded or sent from an unnecessary port on the way.

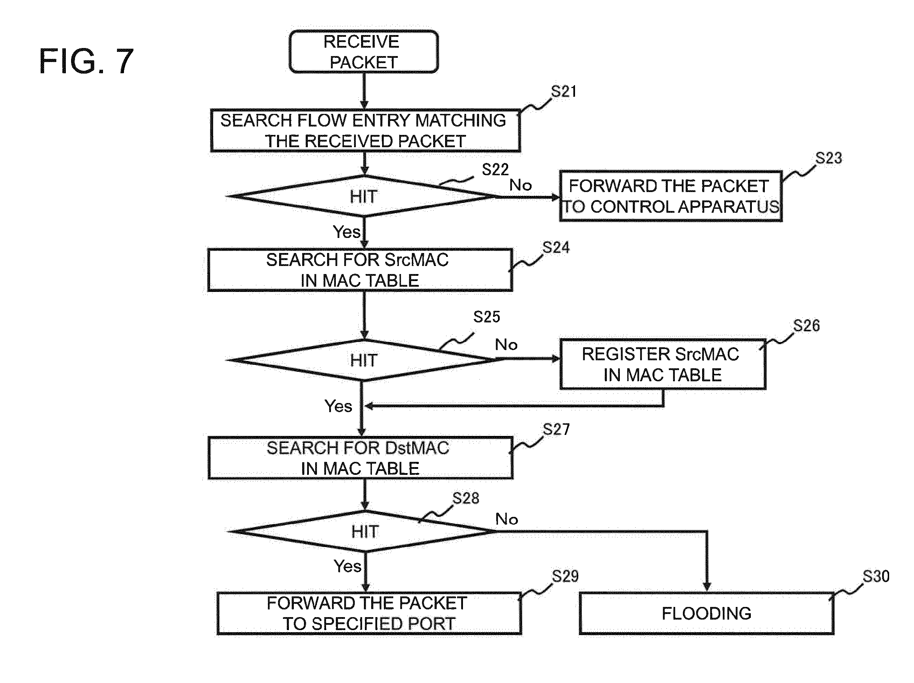

Next, the operation of the switch that performs the packet forwarding above will be described with reference to the drawings. Fig. 7 is a flowchart for explaining the operation of the switch of the first exemplary embodiment of the present invention. In Fig. 7, when receiving a packet with a predetermined VLAN ID tag attached thereto, the switches 11 to 14 searches for control information (flow entry) having a matching rule that matches the received packet using the first packet forwarding function 101 (step S21 in Fig. 7).

When no control information (flow entry) having a matching rule that matches the received packet is found as a result of the search ("No" in step S22 in Fig. 7), i.e., the control information set in the step S11 in Fig. 3 has not been set, the switches 11 to 14 forward the packet to the control apparatus 20 and requests control information (flow entry) to be set (step S23 in Fig. 7).

When control information (flow entry) having a matching rule that matches the received packet is found ("Yes" in the step S22 in Fig. 7), i.e., the control information set in the step S11 in Fig. 3 has been set, the switches 11 to 14 forwards the packet to the second packet forwarding function 102. Like a layer 2 switch, the second packet forwarding function 102 first refers to a MAC (Media Access Control) table (MAC address table) thereof to confirm whether or not the source MAC address (Src MAC) has been learned (step S24 in Fig. 7). When the source MAC address has not been learned ("No" in step S25 in Fig. 7), the second packet forwarding function 102 registers a set of the source MAC address, the receiving port, and the VLAN ID of the received packet in the MAC table (step S26 in Fig. 7).

Next, the second packet forwarding function 102 refers to the MAC table (MAC address table) to confirm whether or not the destination MAC address (Dst MAC) has been learned (step S27 in Fig. 7). When the destination MAC address has been learned ("Yes" in step S28 in Fig. 7), the second packet forwarding function 102 transmits the received packet from a port specified by a corresponding entry in the MAC table (step S29 in Fig. 7).

When the destination MAC address has not been learned ("No" in the step S28 in Fig. 7), the second packet forwarding function 102 floods the packet (transmitting the packet from all the ports for which the same VLAN ID is set, except for the receiving port) (step S30 in Fig. 7).

As described above, the switches 11 to 14, for which the control information (flow entry) for normal port forwarding has been set, are capable of a packet forwarding operation equivalent to that of a layer 2 switch.

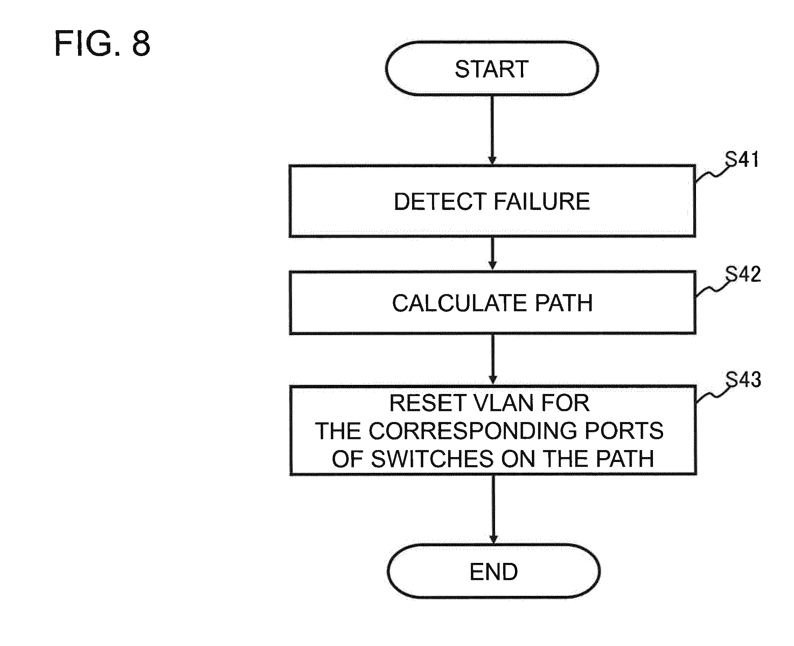

Next, the operation when a failure occurs in the packet forwarding path, through which the terminals A 50 and B 60 are able to communicate with each other, will be described. Fig. 8 is a flowchart for explaining a path switching operation of the control apparatus of the first exemplary embodiment of the present invention. In Fig. 8, the control apparatus 20 detects a failure in the packet forwarding path (step S41 in Fig. 8). Examples of the methods (failure detecting means) for the control apparatus 20 to detect a failure in the packet forwarding path include the reception of a notification of port configuration changes such as a "Port-status" message from the switches 11 to 14, and the reception of a link failure notification based on the exchanges of keep-alive signals among the switches 11 to 14.

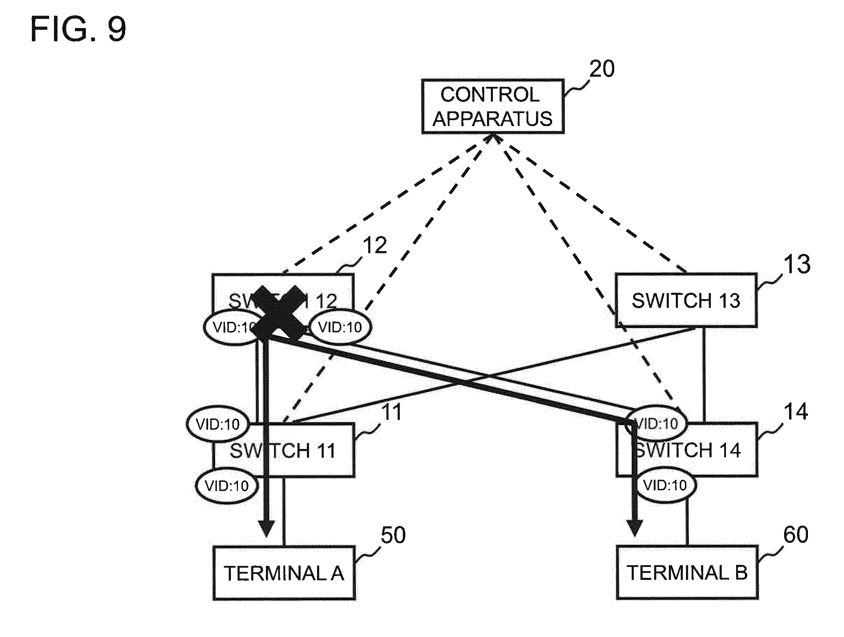

Fig. 9 is a drawing when a failure occurs in the switch 12 in a state in which communication is possible as in Fig. 6. Since the switch 12 is located on the packet forwarding path between the terminals A 50 and B 60, the control apparatus 20 determines that the path must be changed.

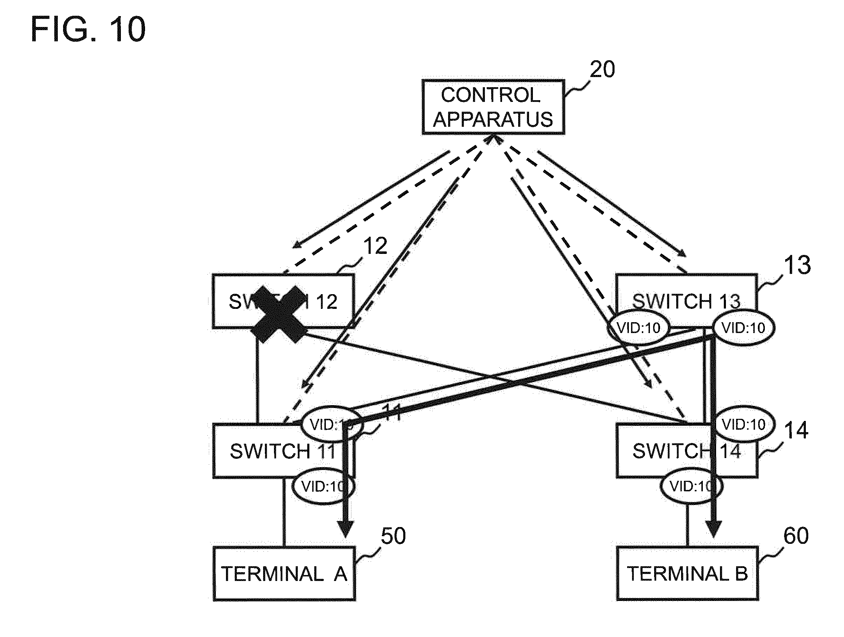

The control apparatus 20 calculates a packet forwarding path between the terminals A 50 and B 60 (step S42 in Fig. 8). Here, it is assumed that a path going through the switches 11, 13, and 14 is calculated as shown in Fig. 10.

Next, the control apparatus 20 sets a VLAN ID predetermined for the packet between the terminals A 50 and B 60 for ports of the switch 13 on the new packet forwarding path, which will serve as input/output ports of the packet between the terminals A 50 and B 60. Further, the control apparatus 20 deletes the VLAN ID set for the switch 12 (step S43 in Fig. 8). At this time, the control apparatus 20 deletes an entry, learned by the second packet forwarding function 102 of the switch 11 located immediately before the switch 12 on the packet forwarding path, that forwards a packet addressed to the terminal B 60 to the connection port of the switch 12, i.e., an entry in which the MAC address of the terminal B 60 is set. Similarly, the control apparatus 20 deletes an entry, learned by the second packet forwarding function 102 of the switch 14, that forwards a packet addressed to the terminal A 50 to the connection port of the switch 12.

Fig. 10 is a drawing showing a state in which the VLAN ID of 10 is set for ports on the newly set packet forwarding path between the terminals A 50 and B 60. In this state, communication between the terminals A 50 and B 60 can be achieved via the path going through the switches 11, 13, and 14.

Next, the setting of the control information (flow entry) for normal port forwarding described above and the process of enabling communication by the second packet forwarding function of the switches will be described along with content changes in two tables of the switches.

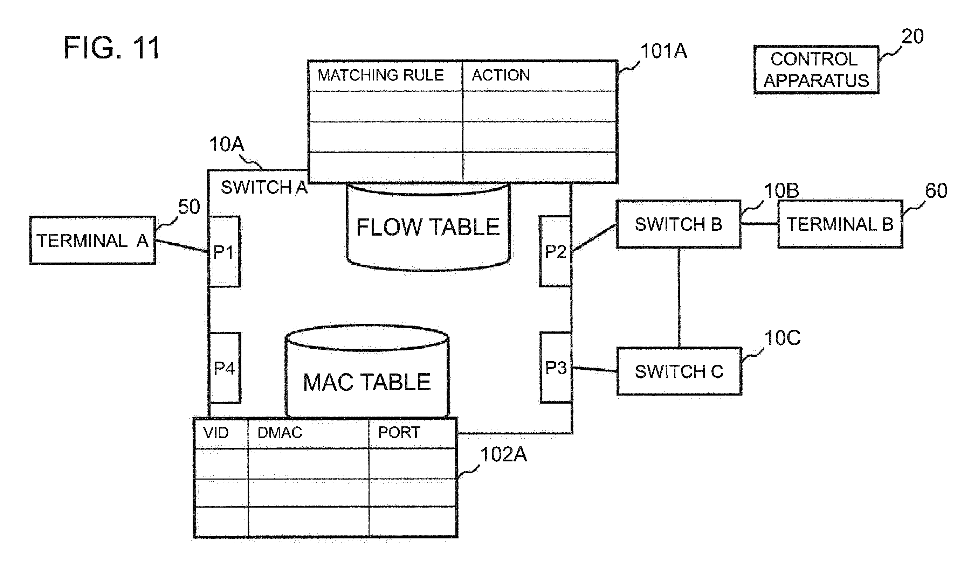

Fig. 11 is a drawing schematically showing the configuration of a switch 10A connected to the terminal A 50 and switches 10B and 10C. The first packet forwarding function of the switch 10A holds a first table (flow table) 101A that stores control information associating a matching rule with an action. The second packet forwarding function of the switch 10A holds a MAC table 102A that associates a VLAN ID (VID) with a DMAC (destination MAC address) and a port.

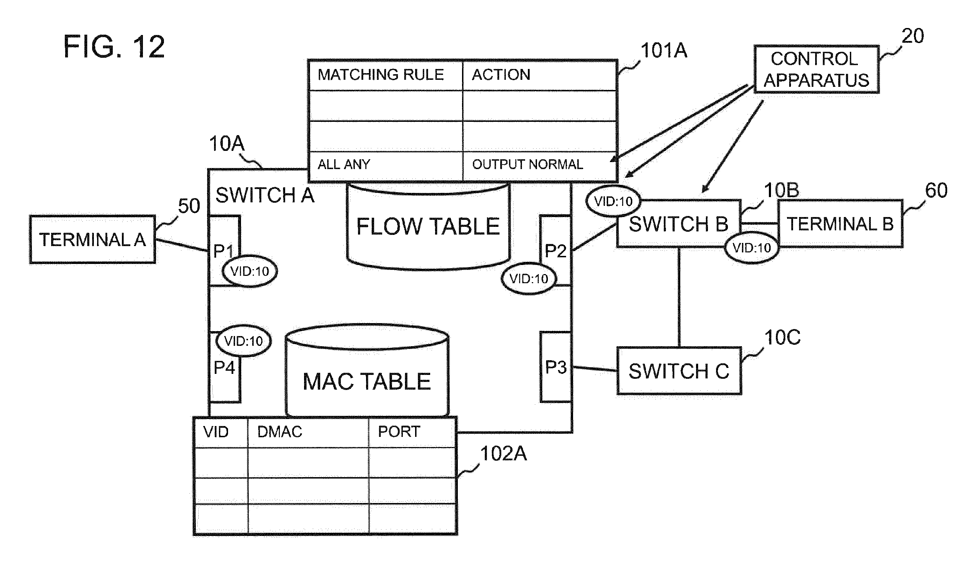

Fig. 12 is a drawing showing a state in which the processes of the steps S11 to S13 in Fig. 3 have been performed, and the control apparatus 20 has set the control information (flow entry) for normal port forwarding in the first table (flow table) 101A of the switch 10A and set a VLAN ID for the corresponding ports of the switch 10A. At this point, the MAC table 102A of the switch 10A is empty since no packet between the terminals A 50 and B 60 has been received.

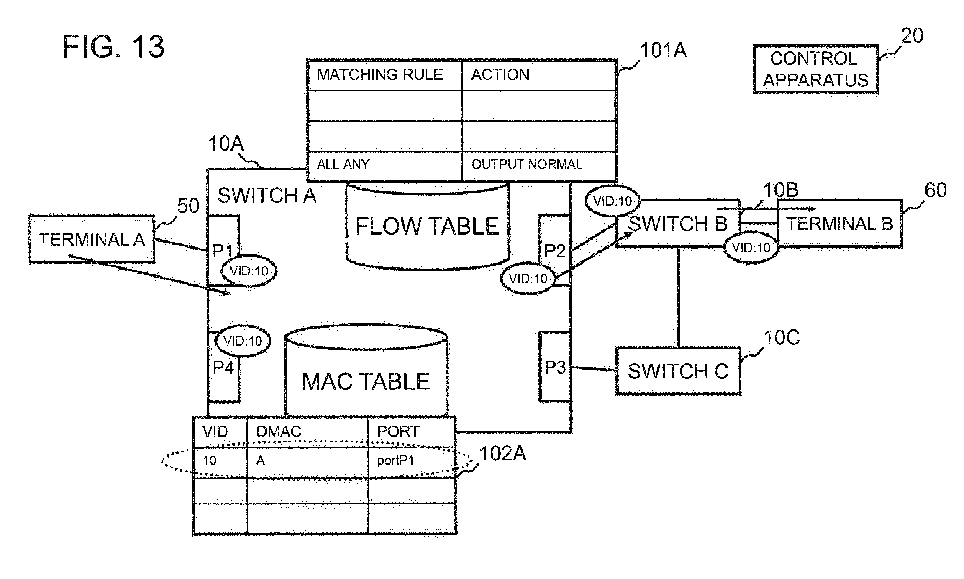

Fig. 13 is a drawing showing a state in which the switch 10A has received a packet from the terminal A 50 to the terminal B 60. As in the operation of the switches described above, upon receiving the packet tagged with the VLAN ID of 10, the switch 10A searches the first table (flow table) 101A and applies an action outputting the packet from the NORMAL port according to an entry having a matching rule "ALL ANY." Using the second packet forwarding function 102, the switch 10A registers a set of the source MAC address, the receiving port, and the VLAN ID of the received packet in the MAC table 102A (refer to the area within the dotted line in Fig. 13). Since the MAC table 102A, however, does not have any entry that corresponds to the destination MAC address of the received packet, the switch 10A floods the received packet.

As a result, the packet from the terminal A 50 to the terminal B 60 is forwarded to the switch 10B. The switch 10B performs the same processing as the switch 10A, and the packet from the terminal A 50 to the terminal B 60 reaches the terminal B 60.

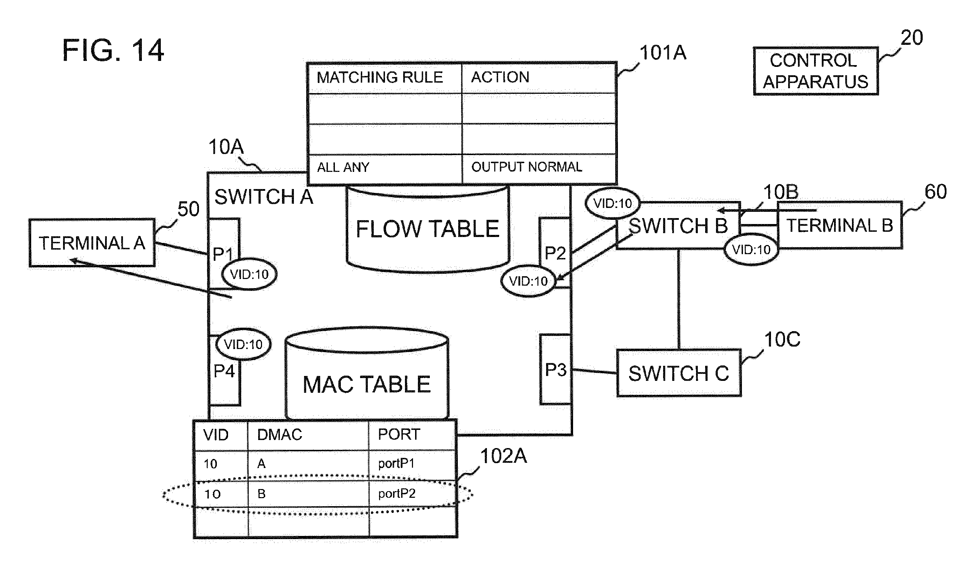

Then, as shown in Fig. 14, when the terminal B 60 transmits a packet to the terminal A 50, the switch 10B processes the packet using the second packet forwarding function according to the settings of the control information (flow entry) for normal port forwarding. The switch 10B learns the MAC address of the terminal B 60 and the port information thereof. Further, since the MAC address of the terminal A 50 has been learned already, the switch 10B forwards the packet to the switch 10A.

The switch 10A processes the packet using the second packet forwarding function according to the settings of the control information (flow entry) for normal port forwarding. The switch 10A registers the MAC address of the terminal B60 and the port information thereof in the MAC table 102A (refer to the area within the dotted line in the MAC table 102A in Fig. 14). Since the MAC address of the terminal A 50 has been learned, the switch 10A refers to the corresponding entry in the MAC table 102A and forwards the packet to the terminal A 50 from a port P1.

In this state, the switches 10A and 10B have learned the transmission destinations of packets from both the terminals A 50 and B 60, and the terminals A 50 and B 60 will exchange packets without flooding thereafter.

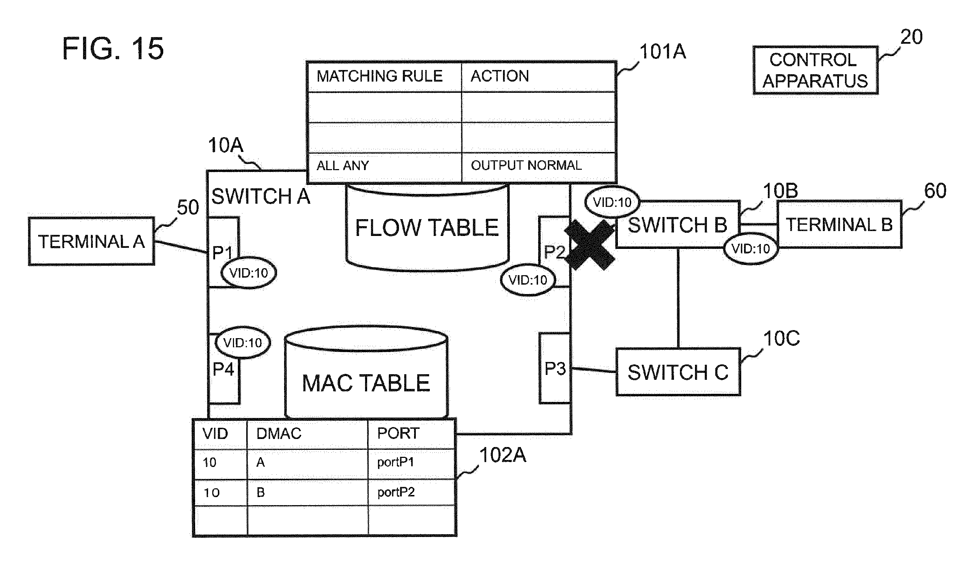

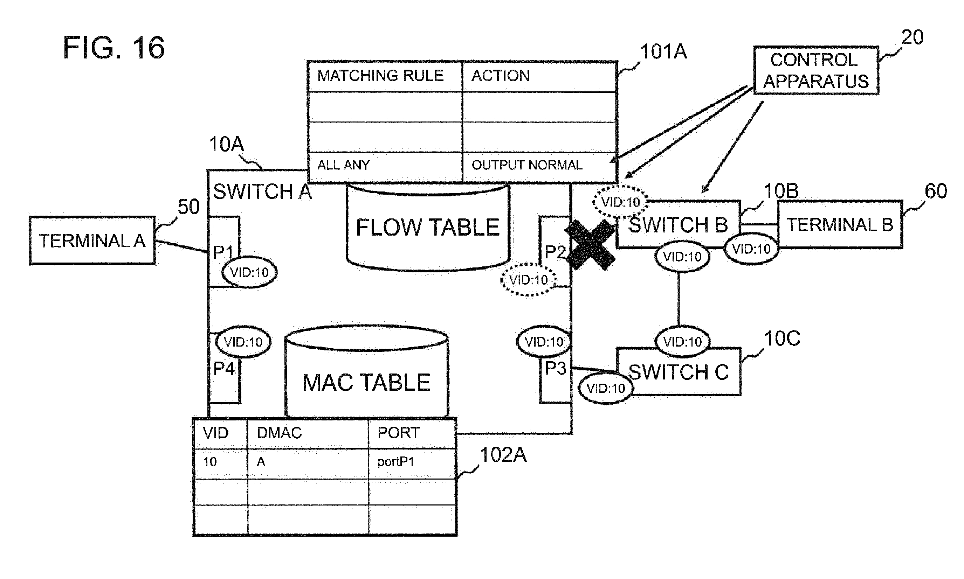

Then, let us assume that a failure has occurred in the link between a port P2 of the switch 10A and the switch 10B, as shown in Fig. 15. In this case, the control apparatus 20 performs the processes of the steps S41 to S43 in Fig. 8. Fig. 16 is a drawing showing a state in which the control apparatus 20 has performed the processes of the steps S41 to S43 in Fig. 8. More concretely, the control apparatus 20 changes the packet forwarding path between the terminals A 50 and B 60 to one that does not use the link between the port P2 of the switch 10A and the switch 10B (the port P1 of the switch 10A- a port P3 of the switch 10A - the switch 10C - the switch 10B), and sets and deletes VLAN IDs as necessary. Further, the control apparatus 20 deletes an entry stating the output destination of a packet having the MAC address of the terminal B 60 from the MAC table 102A of the switch 10A while changing the settings of VLAN IDs. Similarly, the control apparatus 20 deletes an entry stating the output destination of a packet having the MAC address of the terminal A 50 from the MAC table 102A of the switch 10B (not shown in the drawings).

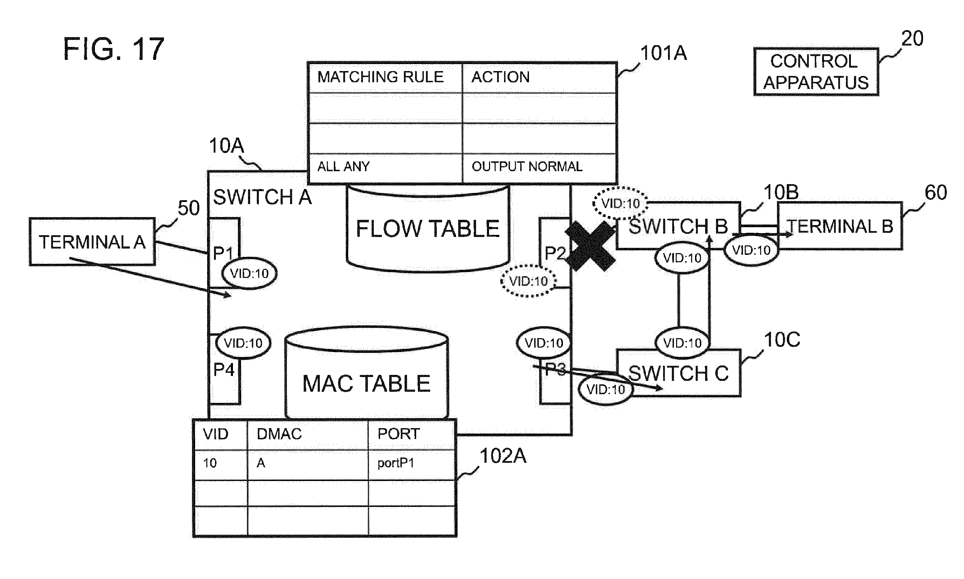

Fig. 17 is a drawing showing a state in which the switch 10A has received a packet from the terminal A 50 to the terminal B 60. As in the operation of the switches described above, upon receiving the packet, the switch 10A searches the first table (flow table) 101A and applies an action outputting the packet from the NORMAL port according to an entry having a matching rule "ALL ANY." Using the second packet forwarding function 102, the switch 10A confirms whether or not a set of the source MAC address, the receiving port, and the VLAN ID of the received packet is registered in the MAC table 102A. Since the MAC address of the terminal A 50 has been registered in the MAC table, learning is omitted (refer to the MAC table 102A in Fig. 17). Meanwhile, since the MAC table 102A does not have any entry that corresponds to the destination MAC address of the received packet, the switch 10A floods the received packet.

As a result, the packet from the terminal A 50 to the terminal B 60 is forwarded to the switch 10C. The switch 10C performs the same processing as the switch 10A, and the packet from the terminal A 50 to the terminal B 60 is forwarded to the switch 10B by flooding. Finally, the packet from the terminal A 50 to the terminal B 60 reaches the terminal B 60 via the switch 10B who has already learned the MAC address of the terminal B 60.

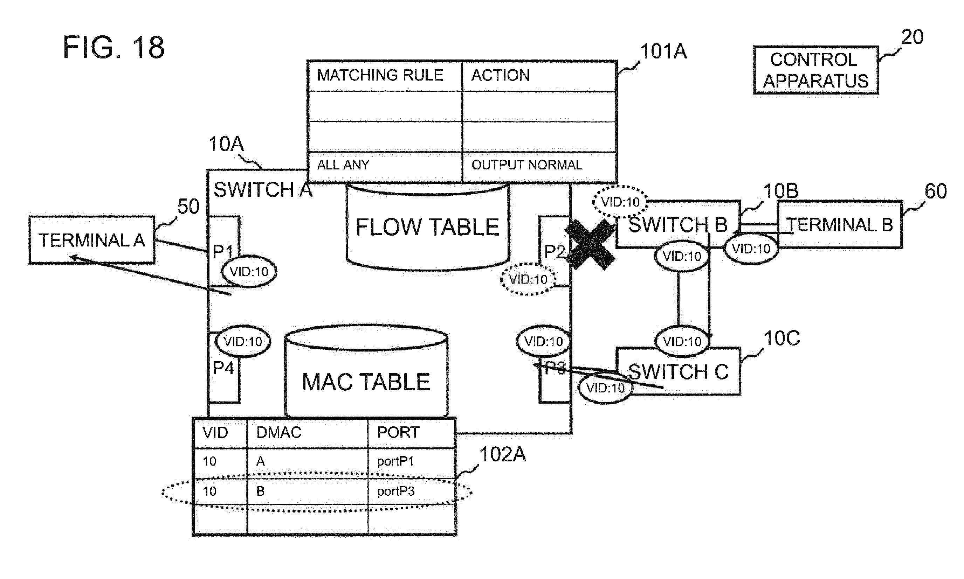

Then, when the terminal B 60 transmits a packet to the terminal A 50 as shown in Fig. 18, the switch 10B processes the packet using the second packet forwarding function according to the settings of the control information (flow entry) for normal port forwarding. The switch 10B confirms whether or not a set of the MAC address of the terminal B 60 and the port information thereof is registered in the MAC table 102A. Since the MAC address of the terminal B 60 has been registered in the MAC table, learning is omitted. Meanwhile, since the MAC address of the terminal A 50 has been learned already, the switch 10B refers to the corresponding entry in the MAC table 102A and forwards the packet to the switch 10C.

After having learned the set of the MAC address of the terminal B 60 and the port information thereof, the switch 10C refers to an entry associated with the MAC address of the terminal A 50 in the MAC table 102A and forwards the packet to the switch 10A. Similarly, after having learned the set of the MAC address of the terminal B 60 and the port information thereof (the port P3; refer to the area within the dotted line in the MAC table 102A in Fig. 18), the switch 10A refers to an entry associated with the MAC address of the terminal A 50 in the MAC table 102A and forwards the packet to the terminal A 50.

In this state, the switches 10A to 10C have learned the transmission destinations of packets from both the terminals A 50 and B 60 again, and the terminals A 50 and B 60 will exchange packets without flooding thereafter.

### (Second Exemplary Embodiment)

Next, a second exemplary embodiment of the present invention in which the operation of the control apparatus 20 of the first exemplary embodiment is changed will be described. The basic configurations of the control apparatus and the switches are the same as the first exemplary embodiment, but the control information setting unit 202 of the control apparatus 20 sets control information that designates the forwarding destination of a received packet for some of the switches instead of the control information (flow entry) for normal port forwarding. Therefore, this difference will be mainly explained below.

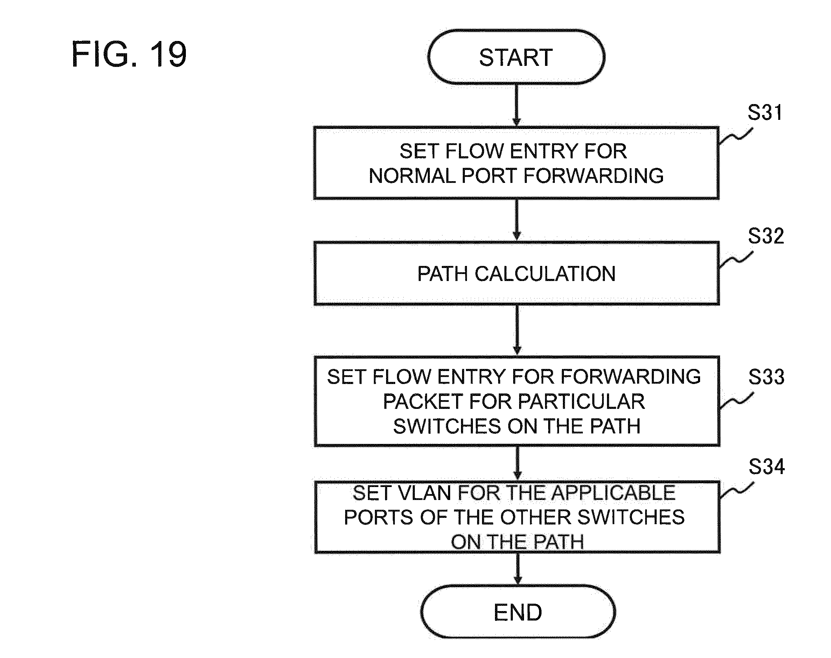

Fig. 19 is a flowchart for explaining the operation of the control apparatus of the second exemplary embodiment of the present invention. The operation from steps S31 to S32 is the same as the operation from the steps S11 to S12 of the first exemplary embodiment in Fig. 3. A control apparatus 20A of the second exemplary embodiment of the present invention sets control information (flow entry) for forwarding a packet for particular switches on the packet forwarding path calculated in the step S32 (step S33).

Next, the control apparatus 20A sets a VLAN ID predetermined for a packet between the terminals A 50 and B 60 for the ports, which serve as input/output ports of the packet between the terminals A 50 and B 60, of the switches for which the control information (flow entry) for forwarding a packet was not set in the step S33 (step S34 in Fig. 19).

The switches for which the control information (flow entry) for forwarding a packet is set can be determined for instance on the basis of the number of pieces of control information (flow entry) that each switch is capable of holding. For instance, if the number of pieces of control information (flow entry) that a switch can hold is greater than a predetermined threshold value (or not smaller than the predetermined threshold value), the control information (flow entry) for forwarding a packet will be set for the switch. Only the control information (flow entry) for normal port forwarding is set for switches that can hold a smaller number of pieces of control information (flow entry) than the predetermined threshold value (or a number of pieces of control information (flow entry) not greater than the predetermined threshold value). Otherwise, the switches for which the control information (flow entry) for forwarding a packet is set can be selected by considering the location of a switch (for instance whether it is a core switch or edge switch) or whether or not it has the second packet forwarding function 102.

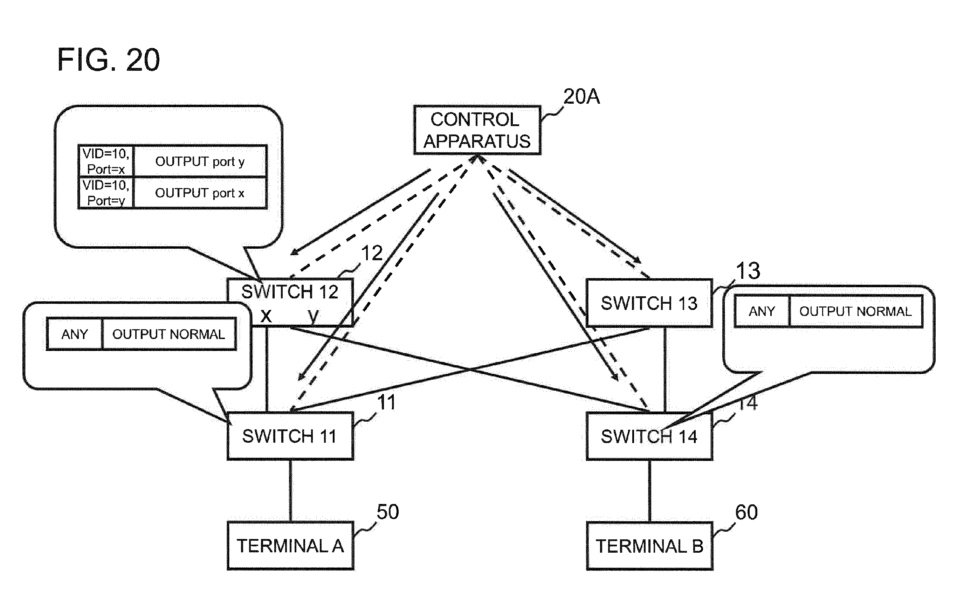

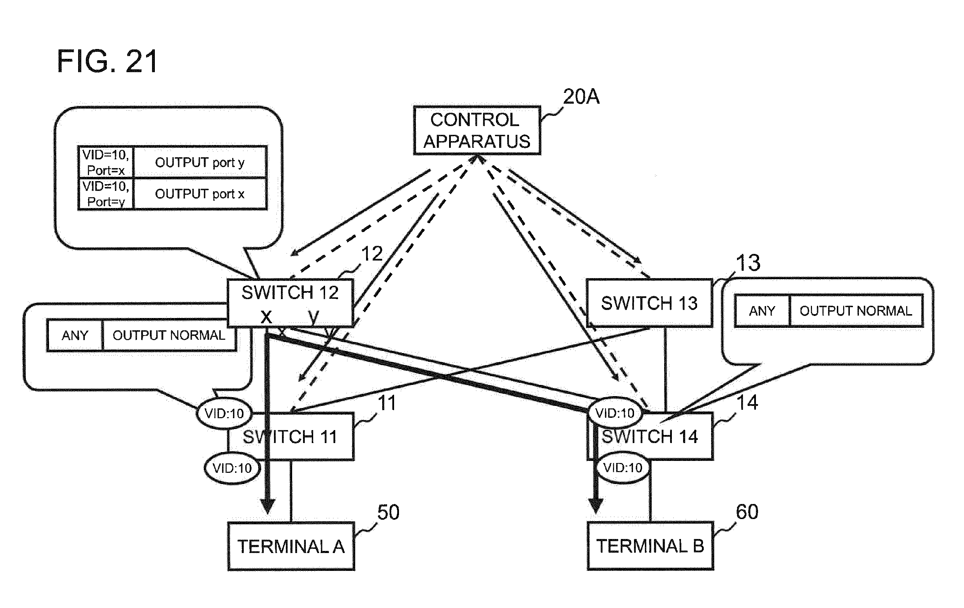

Figs. 20 and 21 are drawings showing a state in which the control information (flow entry) for forwarding a packet has been set for the switch 12 on a packet forwarding path between the terminals A 50 and B 60, and the VLAN ID of 10 has been set for the ports of the other switches 11 and 14. In this state, the switches 11 and 14 forward a packet as in the first exemplary embodiment. Further, the switch 12 has the first packet forwarding function 101 refer to the control information (flow entry) for forwarding a packet and outputs the received packet to the port designated by the control apparatus 20A.

As described, the present invention can be changed to a mode in which the control information (flow entry) for forwarding a packet is set for some switches on a path. As a result, the occurrence of flooding performed by switches on the path can be reduced, compared with the first exemplary embodiment. Further, the present exemplary embodiment can be implemented even if the switches for which the control information (flow entry) for forwarding a packet is set does not have the second packet forwarding function 102.

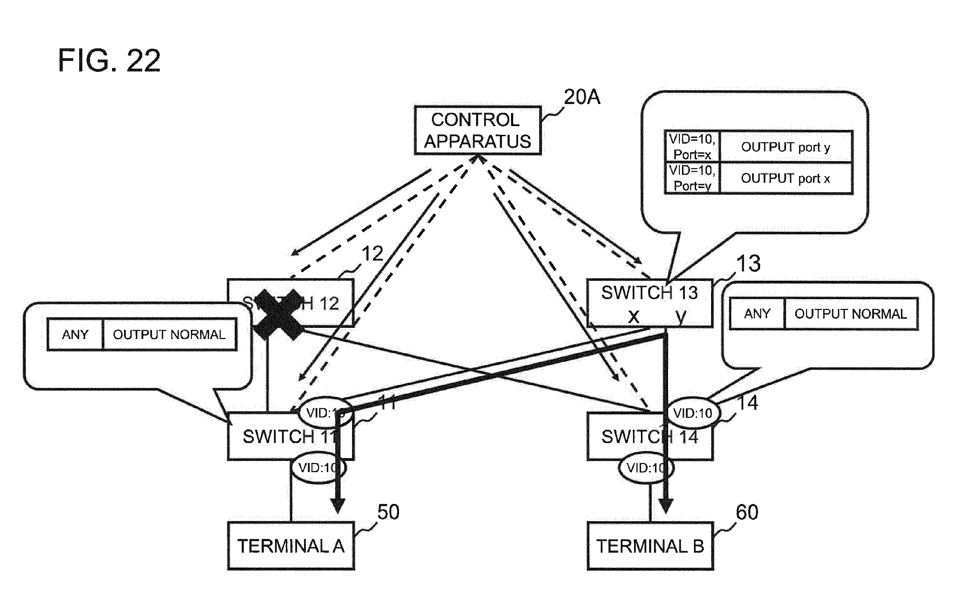

Further, as in the first exemplary embodiment, it is possible to flexibly switch a path, addressing a failure in a switch on the path, in the present exemplary embodiment as well. For instance, when a failure occurs in the switch 12 on a path as in the first exemplary embodiment, the control apparatus 20A recalculates another path between the terminals A 50 and B 60 as shown in Fig. 22.

Then, the control apparatus 20A sets the control information (flow entry) for forwarding a packet for the switch 13 on the new packet forwarding path. Further, the control apparatus 20A sets a predetermined VLAN ID for the port of the switch 11 connected to the switch 13, and the port of the switch 14 connected to the switch 13. Moreover, the control apparatus 20A deletes the VLAN ID from the ports of the switches 11 and 14 connected to the switch 12. Then, the control apparatus 20A deletes the entry, learned by the second packet forwarding function 102 of the switch 11 located immediately before the switch 12 on the packet forwarding path, forwarding a packet addressed to the terminal B 60 to the port connected to the switch 12. Similarly, the control apparatus 20A deletes the entry, learned by the second packet forwarding function of the switch 14, forwarding a packet addressed to the terminal A 50 to the port connected to the switch 12.

In the configuration described above, it becomes possible to easily switch a path according to failures and the network status in the mode in which the control information (flow entry) for forwarding a packet is set for some switches on the path.

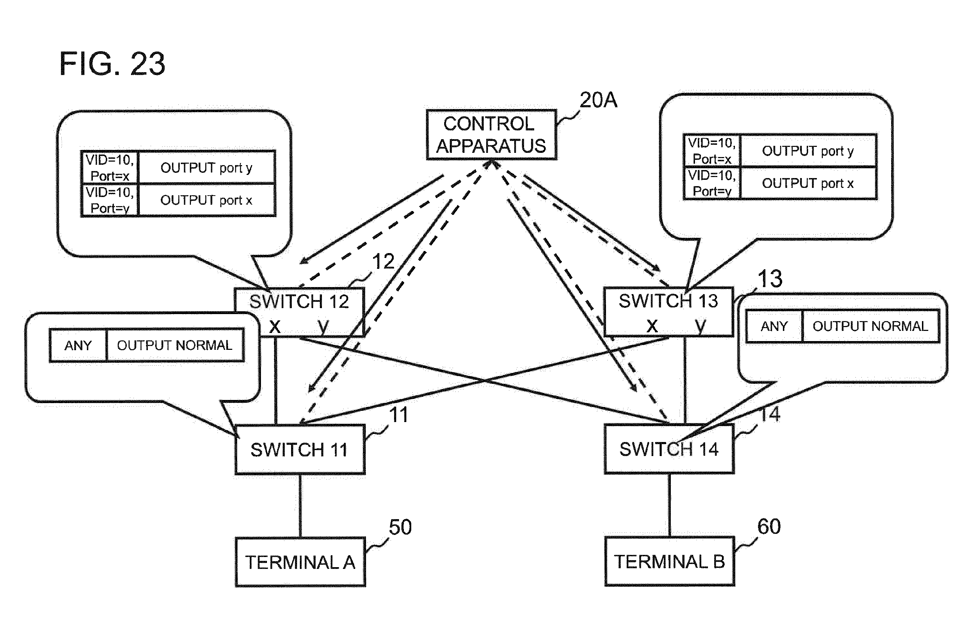

Further, in the second exemplary embodiment, the control information (flow entry) for forwarding a packet is set after the path calculation has been performed in the step S32 in Fig. 19, however, the control information (flow entry) for forwarding a packet may be set for predetermined switches in advance as shown in Fig. 23. In this case, the setting of the control information for the switches 12 and 13 at the time of path switching can be omitted.

Finally, preferred modes of the present invention will be summarized.

### (Mode 1)

A control apparatus, comprising:
a communication unit that communicates with a plurality of switches including a first packet forwarding function that processes a packet based on control information set externally and a second packet forwarding function that learns relationship between a transmission source address and a receiving port of a received packet and determines an output port of a packet;
a control information setting unit that sets control information instructing the first packet forwarding function of the plurality of switches to forward a packet using the second packet forwarding function;
a path calculation unit that calculates a packet forwarding path based on connection relationship among the plurality of switches; and a VLAN (Virtual Local Area Network) setting unit that sets a VLAN ID (VLAN Identifier) predetermined for the packet for input/output ports of the packet in a switch(es) on the packet forwarding path.

### (Mode 2)

In control apparatus according to mode 1,
the VLAN setting unit sets the VLAN ID by transmitting a predetermined control message to the first packet forwarding function of the switch(es).

### (Mode 3)

The control apparatus according to mode 1 or 2, further comprising: means for detecting a failure in the forwarding path, wherein
the path calculation unit recalculates a packet forwarding path and the VLAN setting unit replaces the VLAN ID when a failure is detected in the forwarding path.

### (Mode 4)

In the control apparatus according to any one of modes 1 to 3,
the control information setting unit sets control information that designates a forwarding destination of a received packet for at least one of the plurality of switches, instead of control information that instructs a packet to be forwarded by the second packet forwarding function.

### (Mode 5)

In the control apparatus according to mode 4,
the control information setting unit determines whether or not to set the control information that designates the forwarding destination of the received packet for one of the plurality of switches based on a number of pieces of control information that the one switch is capable of holding.

### (Mode 6)

A communication system, comprising:
a plurality of switches; and
a control apparatus, wherein
the plurality of switches include a first packet forwarding function that processes a packet based on control information set externally, and a second packet forwarding function that learns relationship between a transmission source address and a receiving port of a received packet and determines an output port of a packet, and
the control apparatus comprises:
   a communication unit that communicates with the plurality of switches;
   a control information setting unit that sets control information instructing the first packet forwarding function of the plurality of switches to forward a packet using the second packet forwarding function;
   a path calculation unit that calculates a packet forwarding path based on connection relationship among the plurality of switches; and a VLAN (Virtual Local Area Network) setting unit that sets a VLAN ID (VLAN Identifier) predetermined for the packet for input/output ports of the packet in a switch(es) on the packet forwarding path.

### (Mode 7)

A switch control method, comprising:
by a control apparatus comprising a communication unit that communicates with a plurality of switches including a first packet forwarding function that processes a packet based on control information set externally, and a second packet forwarding function that learns relationship between a transmission source address and a receiving port of a received packet and determines an output port of a packet, setting control information instructing the first packet forwarding function of the plurality of switches to forward a packet using the second packet forwarding function;
calculating a packet forwarding path based on connection relationship among the plurality of switches; and
setting a VLAN ID (Virtual Local Area Network Identifier) predetermined for the packet for input/output ports of the packet in a switch(es) on the packet forwarding path.

### (Mode 8)

A program, causing a computer, comprising a communication unit that communicates with a plurality of switches including a first packet forwarding function that processes a packet based on control information set externally and a second packet forwarding function that learns relationship between a transmission source address and a receiving port of a received packet and determines an output port of a packet, to execute:
setting control information instructing the first packet forwarding function of the plurality of switches to forward a packet using the second packet forwarding function;
calculating a packet forwarding path based on connection relationship among the plurality of switches; and
setting a VLAN ID (Virtual Local Area Network Identifier) predetermined for the packet for input/output ports of the packet in a switch(es) on the packet forwarding path.
Further, Modes 6 to 8 can be developed into Modes 2 to 5 as Mode 1.

Further, the disclosure of each Non-Patent Literature cited above is incorporated herein in its entirety by reference thereto. It should be noted that other objects, features and aspects of the present invention will become apparent in the entire disclosure and that modifications may be done without departing the gist and scope of the present invention as disclosed herein and claimed as appended herewith. Also it should be noted that any combination of the disclosed and/or claimed elements, matters and/or items may fall under the modifications aforementioned. Particularly, the ranges of the numerical values used in the present description should be interpreted as a specific numeric value or small range included in the ranges even in cases where it is not stated so.

### REFERENCE SIGNS LIST

- 10, 11 to 14:: switch
- 20, 20A:: control apparatus
- 50, 60:: terminal A, terminal B
- 101:: first packet forwarding function
- 102:: second packet forwarding function
- 201:: communication unit
- 202:: control information setting unit
- 203:: path calculation unit
- 204:: VLAN setting unit

## Claims

1. A control apparatus, comprising:
a communication unit that communicates with a plurality of switches including a first packet forwarding function that processes a packet based on control information set externally and a second packet forwarding function that learns relationship between a transmission source address and a receiving port of a received packet and determines an output port of a packet;
a control information setting unit that sets control information instructing the first packet forwarding function of the plurality of switches to forward a packet using the second packet forwarding function;
a path calculation unit that calculates a packet forwarding path based on connection relationship among the plurality of switches; and
a VLAN (Virtual Local Area Network) setting unit that sets a VLAN ID (VLAN Identifier) predetermined for the packet for input/output ports of the packet in a switch(es) on the packet forwarding path.

2. The control apparatus according to claim 1, wherein
the VLAN setting unit sets the VLAN ID by transmitting a predetermined control message to the first packet forwarding function of the switch(es) on the forwarding path.

3. The control apparatus according to claim 1 or 2, further comprising:
means for detecting a failure in the forwarding path, wherein
the path calculation unit recalculates a packet forwarding path and the VLAN setting unit replaces the VLAN ID when a failure is detected in the forwarding path.

4. The control apparatus according to claim 3, wherein
the plurality of switches hold the relationship between the address and the port, learned by the second packet forwarding function, as an entry, and
the control apparatus instructs the plurality of switches to delete an entry that includes a port related to the detected failure.

5. The control apparatus according to any one of claims 1 to 4, wherein
the control information setting unit sets control information that designates a forwarding destination of a received packet for at least one of the plurality of switches, instead of control information that instructs a packet to be forwarded by the second packet forwarding function.

6. The control apparatus according to claim 5, wherein
the control information setting unit determines whether or not to set the control information that designates the forwarding destination of the received packet for one of the plurality of switches based on a number of pieces of control information that the one switch is capable of holding.

7. The control apparatus according to claim 6, wherein
the control information setting unit sets the control information that designates the forwarding destination of the received packet for the one switch when the number of pieces of control information that the one switch is capable of holding is greater than a predetermined threshold value.

8. A communication system, comprising:
a plurality of switches; and
a control apparatus, wherein
the plurality of switches include a first packet forwarding function that processes a packet based on control information set externally, and a second packet forwarding function that learns relationship between a transmission source address and a receiving port of a received packet and determines an output port of a packet, and
the control apparatus comprises:
a communication unit that communicates with the plurality of switches;
a control information setting unit that sets control information instructing the first packet forwarding function of the plurality of switches to forward a packet using the second packet forwarding function;
a path calculation unit that calculates a packet forwarding path based on connection relationship among the plurality of switches; and
a VLAN (Virtual Local Area Network) setting unit that sets a VLAN ID (VLAN Identifier) predetermined for the packet for input/output ports of the packet in a switch(es) on the packet forwarding path.

9. A switch control method, comprising:
by a control apparatus comprising a communication unit that communicates with a plurality of switches including a first packet forwarding function that processes a packet based on control information set externally, and a second packet forwarding function that learns relationship between a transmission source address and a receiving port of a received packet and determines an output port of a packet, setting control information instructing the first packet forwarding function of the plurality of switches to forward a packet using the second packet forwarding function;
calculating a packet forwarding path based on connection relationship among the plurality of switches; and
setting a VLAN ID (Virtual Local Area Network Identifier) predetermined for the packet for input/output ports of the packet in a switch(es) on the packet forwarding path.

10. The switch control method according to claim 9, wherein
the control apparatus sets the VLAN ID by transmitting a predetermined control message to the first packet forwarding function of the switch(es) on the forwarding path.

11. The switch control method according to claim 9 or 10, comprising:
by the control apparatus, detecting a failure in the forwarding path; and
recalculate a packet forwarding path and replacing the VLAN ID when a failure is detected in the forwarding path.

12. The switch control method according to claim 11, comprising:
by the plurality of switches, holding the relationship between the address and the port, learned by the second packet forwarding function, as an entry; and
by the control apparatus, instructing the plurality of switches to delete an entry that includes a port related to the detected failure.

13. The switch control method according to any one of claims 9 to 12, comprising:
by the control apparatus, setting control information that designates a forwarding destination of a received packet for at least one of the plurality of switches, instead of control information that instructs a packet to be forwarded by the second packet forwarding function.

14. The switch control method according to claim 13, comprising:
by the control apparatus, determining whether or not to set the control information that designates the forwarding destination of the received packet for one of the plurality of switches based on a number of pieces of control information that the one switch is capable of holding.

15. The switch control method according to claim 14, wherein
the control apparatus sets the control information that designates the forwarding destination of the received packet for the one switch when the number of pieces of control information that the one switch is capable of holding is greater than a predetermined threshold value.

16. A program, causing a computer, comprising a communication unit that communicates with a plurality of switches including a first packet forwarding function that processes a packet based on control information set externally and a second packet forwarding function that learns relationship between a transmission source address and a receiving port of a received packet and determines an output port of a packet, to execute:
setting control information instructing the first packet forwarding function of the plurality of switches to forward a packet using the second packet forwarding function;
calculating a packet forwarding path based on connection relationship among the plurality of switches; and
setting a VLAN ID (Virtual Local Area Network Identifier) predetermined for the packet for input/output ports of the packet in a switch(es) on the packet forwarding path.

17. The program according to claim 16, causing the computer to execute:
setting the VLAN ID by transmitting a predetermined control message to the first packet forwarding function of the switch(es) on the forwarding path.

18. The program according to claim 16 or 17, causing the computer to execute:
detecting a failure in the forwarding path; and
recalculating a packet forwarding path and replacing the VLAN ID when a failure is detected in the forwarding path.

19. The program according to any one of claims 16 to 18, causing the computer to execute:
setting control information that designates a forwarding destination of a received packet for at least one of the plurality of switches, instead of control information that instructs a packet to be forwarded by the second packet forwarding function.

20. The program according to claim 19, causing the computer to execute:
determining whether or not to set the control information that designates the forwarding destination of the received packet for one of the plurality of switches based on a number of pieces of control information that the one switch is capable of holding.
